# EUROPÄISCHE PATENTSCHRIFT

(11) **EP 2 035 265 B1**
(45) Veröffentlichungstag und Bekanntmachung des Hinweises auf die Patenterteilung: **08.12.2010**
(21) Anmeldenummer: 07728585.6
(22) Anmeldetag: 27.04.2007
(51) Int. Cl.: B60T 8/40, F04B 9/04

(54) **FAHRZEUGBREMSANLAGEN-KOLBENPUMPE**
VEHICLE BRAKE SYSTEM PISTON PUMP
POMPE À PISTON POUR UNE INSTALLATION DE FREIN DE VÉHICULE

(30) Priorität: 16.06.2006 DE 102006027773
(43) Veröffentlichungstag der Anmeldung: 18.03.2009
(73) Patentinhaber: Robert Bosch GmbH, 70442 Stuttgart (DE)
(72) Erfinder: SINNL, Erwin, 74336 Meimsheim (DE); FEESER, Hans, 71665 Vaihingen (DE)
(86) Internationale Anmeldenummer: PCT/EP2007/054130
(87) Internationale Veröffentlichungsnummer: WO 2007/144228

(56) Entgegenhaltungen:
- EP-A1- 0 639 713
- EP-A1- 1 669 597
- EP-A2- 0 140 862
- EP-A2- 0 566 067
- WO-A-99/40669
- JP-A- 6 050 345
- JP-A- 11 252 854

## Beschreibung

### Stand der Technik

Die Erfindung betrifft einen Fahrzeugbremsanlagen-Kolbenpumpe mit einem Kolben, der in einer Kolbenführung verschiebbar gelagert ist, einem Antriebselement zum Verschieben des Kolbens, an dem der Kolben mit einer seiner Stirnseiten druckkraftübertragend gekoppelt ist und das mit einer Antriebswelle und einem darauf drehfest ausgebildeten Antriebsexzenter gebildet ist.

Fahrzeugbremsanlagen-Kolbenpumpe der oben genannten Art werden in Kraftfahrzeugen verwendet, welche mit einem hydraulischen Bremssystem insbesondere mit Antiblockierfunktion oder Antischlupfregelung ausgestattet sind. Sie dienen in dem Bremssystem zum Fördern von Bremsflüssigkeit.

Bekannte Fahrzeugbremsanlagen-Kolbenpumpen sind mit einem Antriebsmotor gestaltet, der eine Motorwelle von ca. 8mm Durchmesser aufweist. Auf die Motorwelle ist ein Exzenter aufgebracht, mittels dem zwei gegenüberliegend angeordnete Kolben der Kolbenpumpe hin und her bewegbar sind. Diese Kolben fördern im Zusammenwirken mit zugehörigen Ventilen die Bremsflüssigkeit. Die bekannten Fahrzeugbremsanlagen-Kolbenpumpen benötigen im Bereich der Motorwelle und des Exzenters einen vordefinierten Bauraum und es ist ferner erforderlich zwischen dem Exzenter und dem Antriebsmotor ein gedichtetes Lager, ein so genanntes A-Lager, zu verwenden.

Aus WO-A-99/40669 ist ein Elektromotor bekannt, auf dessen Welle eine exzentrische Buchse drehfest angeordnet sein kann. Auf den derart gebildeten Exzenter soll an den beiden Seiten eines Lagerrings je ein Anschlagring aufgepresst sein.

Es ist eine Aufgabe der Erfindung eine Fahrzeugbremsanlagen-Kolbenpumpe vorzusehen, die kostengünstiger herstellbar ist und insbesondere dabei zugleich auch in geringerem Bauraum untergebracht werden kann.

### Offenbarung der Erfindung

Die Aufgabe ist erfindungsgemäß mit einer Fahrzeugbremsanlagen-Kolbenpumpe nach Anspruch 1 gelöst.

### Vorteile der Erfindung

Die erfindungsgemäßen Gestaltungen von Fahrzeugbremsanlagen-Kolbenpumpen ermöglichen eine wesentliche Reduzierung der radialen Größe bzw. des Durchmessers des an der Fahrzeugbremsanlagen-Kolbenpumpe vorgesehenen Exzenterrings. Dies ermöglicht, die Kolbenpumpe insgesamt kompakter unter Verbrauch von weniger Bauraum zu gestalten. Die erfindungsgemäß vorgesehenen Anlagescheiben ermöglichen einen definierten Anlauf des den Antriebsexzenter umgebenden Lagers. Ein Luftsaugen des Antriebsexzenter ist dadurch verhindert. Die erfindungemäßen Anlagescheiben verhindern ferner einen Leckageübertritt in den Motorinnenraum des zugehörigen Antriebsmotors. Eine Abdichtung des motorseitigen Lagers der Antriebswelle (A-Lager) kann dadurch möglicherweise entfallen. Zugleich ist das erfindungsgemäß eingesetzte Lager auf dem Antriebsexzenter baugleich mit einem bereits die Antriebswelle stützenden Lager und kann daher als Gleichteil kostengünstiger bereit gestellt werden. Dieses Lager ist daher im Vergleich zu bekannten Exzenterhülsen kostengünstiger. Aufgrund der erfindungsgemäß verwendeten, im Durchmesser kleineren Antriebswelle kann der verwendete Antriebsmotor insgesamt kleiner gestaltet oder, bei gleicher Baugröße mit längeren Kohlebürsten ausgebildet sein. Derartige längere Kohlebürsten ermöglichen eine längere Laufzeit des Motors. Bei einer Verringerung des Motoraußendurchmessers kann ein kleineres Gehäuse und dadurch ein geringerer Bauraum genutzt werden. Ferner führen die erfindungemäßen Anlagescheiben zu einer längeren Führung des zugehörigen Kolbens und damit zu einer besseren Abdichtung.

Ferner ist zumindest eine der Anlagescheiben an ihrer vom Exzenterring abgewandten Seitenfläche mit einem abstehenden Bund gestaltet. Dieser Bund ist im Hinblick auf seinen Außendurchmesser gleich groß gestaltet, wie der Durchmesser bekannter Antriebswellen von Fahrzeugbremsanlagen-Kolbenpumpen. Der Bund dient dann dazu in entsprechend zugehörige die Antriebswelle stützende Lager eingesetzt zu werden. Dadurch ist es möglich als Lager jene zu verwenden, wie sie auch bei bekannten Kolbenpumpen zum Einsatz kommen.

Daher ist erfindungsgemäß auf dem Bund das Lager für die Antriebswelle angeordnet.

Die erfindungsgemäße Anordnung eines Antriebsexzenters an einer Antriebswelle kann trotz dieser genannten Vorteilte dennoch in vorhandene Systems eingesetzt werden, da sie hinsichtlich der Außenmaße im Bereich der die Antriebswelle stützenden Lager gleich groß ausgebildet sein kann.

Bei einer vorteilhaften Weiterbildung der erfindungsgemäßen Fahrzeugbremsanlagen-Kolbenpumpe ist zur weiteren Optimierung der oben genannten Verbesserungen zumindest eine der Anlagescheiben radial über den Exzenterring herausragend ausgestaltet.

Darüber hinaus ist es von Vorteil, die nach außen gewandten Mantelfläche des Exzenterrings und die zum Exzenterring gewandten Seitenflächen der Anlagescheiben gehärtet zu gestalten. Mit einer derartigen Gestaltung kann die Gesamtlebensdauer des Systems im Bereich des Antriebsexzenters verlängert werden.

Um eine Drehmoment übertragende Verbindung zwischen der Antriebswelle und dem Antriebsexzenter herzustellen sind vorteilhaft die Anlagescheiben und der Exzenterring mittels einer Presspassung auf der Antriebswelle drehfest gehalten.

Schließlich ist es von Vorteil die Antriebswelle an ihrer zu dem Antriebsmotor gewandten Seite axial außenseitig von der Anlagescheibe mittels eines nicht gedichteten Lagers zu stützen. Dieses nicht gedichtete Lager kann im Vergleich zu bekannten gedichteten A-Lagem kostengünstiger bereitgestellt werden. Zusammenfassend ergibt sich damit, dass durch die erfindungsgemäße Reduzierung des Durchmessers einer Antriebswelle einer Fahrzeugbremsanlagen-Kolbenpumpe, eines dreiteilig gestalteten Antriebsexzenter und einer Verwendung eines bekannten Antriebswellen-Stützlagers als Exzenterlager insgesamt eine bauraum- und kostenverringernde Lösung gestaltet ist. Darüber hinaus ist durch das Vorsehen von Anlagescheiben als Anlaufflächen einer Exzenterhülse eine reibungsoptimierte Lösung geschaffen, mit der zum Einen ein Luftsaugen und zum Anderen ein Leckageübertritt in den Antriebsmotor verhindert sind.

### Kurze Beschreibung der Zeichnungen

Nachfolgend wird ein Ausführungsbeispiel einer erfindungsgemäßen Fahrzeugbremsanlagen-Kolbenpumpe anhand der beigefügten schematischen Zeichnungen näher erläutert. Es zeigt:
- Fig. 1: einen teilweisen Längsschnitt einer Fahrzeugbremsanlagen- Kolbenpumpe gemäß dem Stand der Technik und
- Fig. 2: einen teilweisen Längsschnitt einer Fahrzeugbremsanlagen- Kolbenpumpe gemäß der Erfindung.

### Ausführungsform der Erfindung

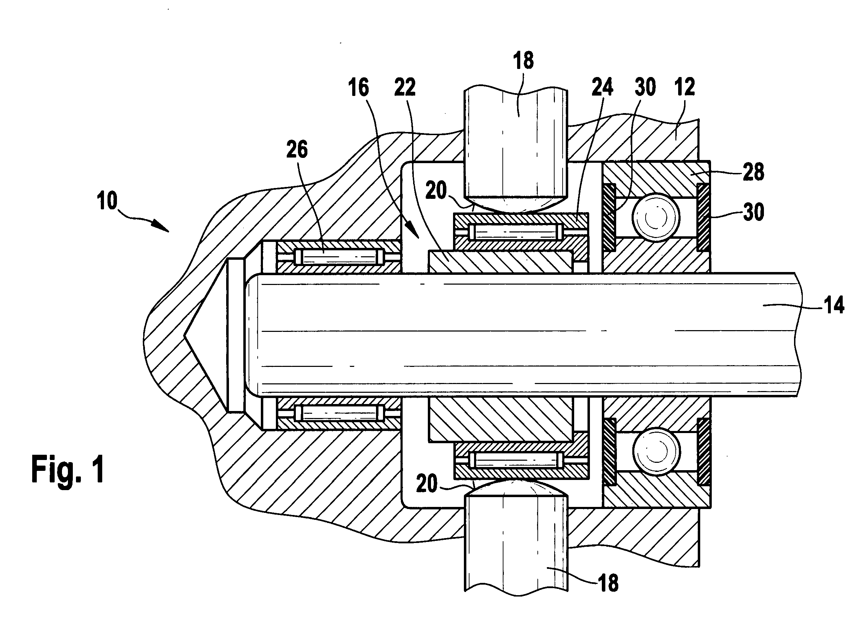

In Fig. 1 ist eine Fahrzeugbremsanlagen-Kolbenpumpe gemäß dem Stand der Technik dargestellt, welche ein Pumpengehäuse 12 mit einer darin ausgebildeten gestuften Bohrung aufweist, in die eine Antriebswelle 14 eines weiteren nicht dargestellten Antriebsmotors der Fahrzeugbremsanlagen-Kolbenpumpe 10 hineinragt.

An der Antriebswelle 14 ist drehfest ein Antriebsexzenter 16 angeordnet, an dem zwei Koben 18 jeweils mit einer Stirnseite 20 in radialer Richtung zur Antriebswelle 14 federnd vorgespannt anliegen. Der Antriebsexzenter 16 ist mit einem Exzenterring 22 gebildet, auf dem eine Exzenterhülse 24 in Form eines Nadellagers (so genanntes E-Lager) angeordnet ist. Die Antriebswelle 14 ist selbst mittels eines Lagers 26 in Form eines Nadellagers (so genanntes C-Lager) am Bodenbereich der gestuften Bohrung des Pumpengehäuses 12 gelagert und mittels eines Lagers 28 in Form eines Kugellagers (so genanntes A-Lager) am Mündungsbereich der gestuften Bohrung des Pumpengehäuses 12 drehbar abgestützt.

Das Lager 28 ist mittels Dichtungen 30 als gedichtetes Lager ausgebildet, um zu verhindern, dass Bremsfluid aus dem Inneren der gestuften Bohrung des Pumpengehäuses 12 zum restlichen Antriebsmotors gelangen kann.

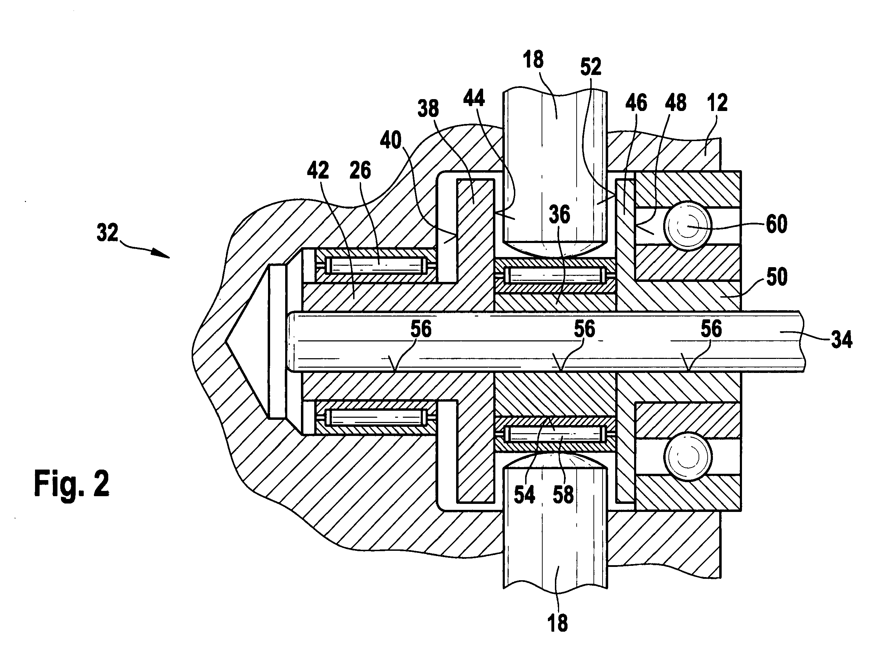

In Fig. 2 ist eine Fahrzeugbremsanlagen-Kolbenpumpe 32 gemäß der Erfindung dargestellt. Diese weist ein Pumpengehäuse 12 auf, welches jenem der Ausführungsform gemäß dem Stand der Technik (siehe Fig. 1) auch im Hinblick auf die gestufte Bohrung entspricht.

Bei der Fahrzeugbremsanlagen-Kolbenpumpe 32 ist jedoch eine im Durchmesser verringerte Antriebswelle 34 eines weiter ebenfalls nicht dargestellten Antriebsmotors vorgesehen. Diese Antriebswelle 34 weist einen Durchmesser von zwischen ca. 5 mm und ca. 6 mm auf. Auf der Antriebswelle 34 ist ein hinsichtlich des Innen- und Außendurchmessers verkleinerter Exzenterring 36 angeordnet, an dessen einer Seite sich eine erste Anlagescheiben 38 befindet. Diese Anlagescheibe 38 ist an Ihrer vom Exzenterring 36 abgewandten Stirnseite 40 mit einem Bund 42 versehen, welcher im Außendurchmesser dem Durchmesser der Antriebswelle 14 gemäß dem Stand der Technik (siehe Fig. 1) entspricht.

Auf den Bund 42 kann daher außenseitig ein Lager 26 in Form eines Nadellagers aufgeschoben werden, welches jenem des Standes der Technik (siehe Fig. 1) entspricht. Die zum Exzenterring 36 gewandte Stirnseite 44 der ersten Anlagescheibe 38 ist dabei gehärtet gestaltet.

An der gegenüberliegenden Seite des Exzenterrings 36 ist eine zweite Anlagescheibe 46 vorgesehen, welche an ihrer vom Exzenterring 36 abgewandten Stirnseite 48 ebenfalls einen Bund 50 aufweist. Auch dieser Bund 50 ist im Außendurchmesser genauso groß gestaltet, wie der Außendurchmesser der Antriebswelle 14 gemäß dem Stand der Technik (siehe Fig. 1). Die zum Exzenterring 36 gewandte Stirnseite 42 der zweiten Anlagescheibe 46 ist ebenfalls gehärtet gestaltet. Ferner ist auch die Mantelfläche 54 des Exzenterrings 36 gehärtet ausgebildet.

Die beiden Anlagescheiben 38 und 46 sowie der Exzenterring 36 sind mittels je einer Presspassung 56 drehmomentübertragend auf die Antriebswelle 34 aufgepresst.

Der Exzenterring 36 ist dabei derart klein gestaltet, dass sein Außendurchmesser jenem des Bundes 42 der ersten Anlagescheibe 38 und damit auch dem Außendurchmesser der Antriebswelle 14 gemäß dem Stand der Technik (siehe Fig. 1) entspricht. Dies ermöglicht es die das E-Lager bildende Exzenterhülse an der Fahrzeugbremsanlagen-Kolbenpumpe 32 gemäß der Erfindung als ein Lager 58 zu gestalten, welches baugleich mit dem in Form eines Nadellagers ausgebildeten Lager 26 (C-Lager) ist. Ferner ist es möglich, aufgrund der Gestaltung des Bundes 50 mit einem derartigen Außendurchmesser, das A-Lager der Fahrzeugbremsanlagen-Kolbenpumpe 32 gemäß der Erfindung hinsichtlich seiner Außenmaße baugleich mit dem Lager 28 gemäß dem Stand der Technik (siehe Fig. 1) zu gestalten. Dabei ist es jedoch nicht erforderlich, dass dieses Lager als ein gedichtetes Lager ausgebildet ist. Es kann vielmehr als ein nicht gedichtetes Lager 60 ausgebildet sein. Dies ist möglich, weil die zweite Anlagescheibe 46 eine Abdichtung gegenüber dem Lager 60 bildet.

## Patentansprüche

1. Fahrzeugbremsanlagen-Kolbenpumpe (32) mit einem Kolben (18), der in einer Kolbenführung verschiebbar gelagert ist, sowie einem Antriebselement zum Verschieben des Kolbens (18), an dem der Kolben (18) mit einer seiner Stirnseiten (20) druckkraftübertragend gekoppelt ist und das mit einer Antriebswelle (14) und einem darauf drehfest ausgebildeten Antriebsexzenter (16) gebildet ist, bei der
- der Antriebsexzenter (16) dreiteilig mit einer ersten und einer zweiten Anlagescheibe (38, 46) sowie einem Exzenterring (36) gebildet ist und der Exzenterring (36) zwischen den beiden Anlagescheiben (38, 46) angeordnet ist,
- zumindest eine der Anlagescheiben (38, 46) an ihrer vom Exzenterring (36) abgewandten Seitenfläche (40, 48) mit einem abstehenden Bund (42, 50) gestaltet ist und
- auf dem Bund (42, 50) das Lager (26, 60) für die Antriebswelle (14) angeordnet ist.

2. Fahrzeugbremsanlagen-Kolbenpumpe nach Anspruch 1,
**dadurch gekennzeichnet, dass** zumindest eine der Anlagescheiben (38, 46) radial über den Exzenterring (36) hinausragt.

3. Fahrzeugbremsanlagen-Kolbenpumpe nach Anspruch 1 oder 2,
**dadurch gekennzeichnet, dass** die nach außen gewandte Mantelfläche (54) des Exzenterrings (36) und die zum Exzenterring (36) gewandten Seitenflächen (44, 52) der Anlagescheiben (38, 46) gehärtet gestaltet sind.

4. Fahrzeugbremsanlagen-Kolbenpumpe nach einem der Ansprüche 1 bis 3,
**dadurch gekennzeichnet, dass** die Anlagescheiben (38, 46) und der Exzenterring (36) mittels je einer Presspassung (56) auf der Antriebswelle (14) drehfest gehalten sind.

5. Fahrzeugbremsanlagen-Kolbenpumpe nach einem der Ansprüche 1 bis 4,
**dadurch gekennzeichnet, dass** die Antriebswelle (14) an ihrer zu einem Antriebsmotor gewandten Seite axial außenseitig von der Anlagescheibe (46) mittels eines nicht gedichteten Lagers (60) gelagert ist.

## Claims

1. Vehicle brake system piston pump (32) with a piston (18) which is mounted displaceably in a piston guide and with a drive element for displacing the piston (18), to which drive element the piston (18) is coupled with one of its end faces (20) so as to transmit pressure force, the said drive element being formed by a drive shaft (14) and by a drive eccentric (16) formed fixedly in terms of rotation on the latter, in which piston pump
- the drive eccentric (16) is formed in three parts with a first and a second bearing disc (38, 46) and with an eccentric ring (36), and the eccentric ring (36) is arranged between the two bearing discs (38, 46),
- at least one of the bearing discs (38, 46) is configured, on its side face (40, 48) facing away from the eccentric ring (36), with a projecting collar (42, 50), and
- the bearing (26, 60) for the drive shaft (14) is arranged on the collar (42, 50).

2. Vehicle brake system piston pump according to Claim 1, **characterized in that** at least one of the bearing discs (38, 46) projects radially beyond the eccentric ring (36).

3. Vehicle brake system piston pump according to Claim 1 or 2, **characterized in that** the outward-facing surface area (54) of the eccentric ring (36) and those side faces (44, 52) of the bearing discs (38, 46) which face the eccentric ring (36) are designed so as to be hardened.

4. Vehicle brake system piston pump according to one of Claims 1 to 3, **characterized in that** the bearing discs (38, 46) and the eccentric ring (36) are in each case held fixedly in terms of rotation on the drive shaft (14) by means of a press fit (56).

5. Vehicle brake system piston pump according to one of Claims 1 to 4, **characterized in that** the drive shaft (14), on its side facing an engine, is mounted axially on the outside of the bearing disc (46) by means of a non-sealed bearing (60).

## Revendications

1. Pompe à piston (32) pour installation de frein de véhicule, comprenant un piston (18), qui est supporté de manière déplaçable dans un guide de piston, ainsi qu'un élément d'entraînement pour déplacer le piston (18), auquel le piston (18) est accouplé en transmettant la force de pression par l'un de ses côtés frontaux (20), et qui est formé avec un arbre d'entraînement (14) et un excentrique d'entraînement (16) est réalisé de manière solidaire en rotation sur celui-ci, dans laquelle :
- l'excentrique d'entraînement (16) est formé en trois parties avec un premier et un deuxième disque d'appui (38, 46) ainsi qu'une bague d'excentrique (36), et la bague d'excentrique (36) est disposée entre les deux disques d'appui (38, 46),
- au moins l'un des disques d'appui (38, 46) est configuré au niveau de sa surface latérale (40, 48) opposée à la bague d'excentrique (36) avec un épaulement saillant (42, 50), et
- le palier (26, 60) pour l'arbre d'entraînement (14) est disposé sur l'épaulement (42, 50).

2. Pompe à piston pour installation de frein de véhicule selon la revendication 1, **caractérisée en ce qu'**au moins l'un des disques d'appui (38, 46) dépasse radialement au-delà de la bague d'excentrique (36).

3. Pompe à piston pour installation de frein de véhicule selon la revendication 1 ou 2, **caractérisée en ce que** la surface d'enveloppe (54), tournée vers l'extérieur, de la bague d'excentrique (36), et les surfaces latérales (44, 52), tournées vers la bague d'excentrique (36), des disques d'appui (38, 46) sont configurées de manière durcie par trempage.

4. Pompe à piston pour installation de frein de véhicule selon l'une quelconque des revendications 1 à 3, **caractérisée en ce que** les disques d'appui (38, 46) et la bague d'excentrique (36) sont maintenus de manière solidaire en rotation au moyen d'un ajustement serré respectif (56) sur l'arbre d'entraînement (14).

5. Pompe à piston pour installation de frein de véhicule selon l'une quelconque des revendications 1 à 4, **caractérisée en ce que** l'arbre d'entraînement (14) est supporté sur son côté opposé à un moteur d'entraînement, axialement du côté extérieur du disque d'appui (46), au moyen d'un palier (60) non étanché.
